# EUROPEAN PATENT APPLICATION

(11) **EP 4 350 926 A1**
(43) Date of publication of application: **10.04.2024**
(21) Application number: 21944086.4
(22) Date of filing: 01.06.2021
(51) Int. Cl.: H02J 3/18, H02J 3/32, H02J 3/38, H02J 3/46

(54) **POWER SYSTEM STABILIZATION SYSTEM**

(71) Applicant: MITSUBISHI ELECTRIC CORPORATION, Chiyoda-ku Tokyo 100-8310 (JP)
(72) Inventor: PAGE, Frederick, Tokyo 100-8310 (JP); KONO, Yoshiyuki, Tokyo 100-8310 (JP); TAHATA, Kazuyori, Tokyo 100-8310 (JP); FUJIWARA, Shuhei, Tokyo 100-8310 (JP); TOMINAGA, Shinji, Tokyo 100-8310 (JP); TAKEDA, Masatoshi, Tokyo 100-8310 (JP)
(74) Representative: Witte, Weller & Partner Patentanwälte mbB
(86) International application number: PCT/JP2021/020872
(87) International publication number: WO 2022/254580

(57) **Abstract**

In a power grid stabilization system (10E), a second energy storage system (61) has a larger energy storage capacity than a first energy storage system (21). A bidirectional AC/DC converter (20) is connected between an AC power grid (15) and a pair of input and output terminals (21P and 21N) of the first energy storage system (21). A first bidirectional DC/DC converter (60) is connected between the pair of input and output terminals (21P and 21N) of the first energy storage system (21) and a pair of input and output terminals (61P and 61N) of the second energy storage system (61).

## Description

### TECHNICAL FIELD

The present disclosure relates to a power grid stabilization system.

### BACKGROUND ART

As the number of renewable energy power supplies increases and the number of conventional power plants decreases, an inertia constant of a power grid decreases, and thus, stability of the power grid is becoming a problem. Therefore, in order to stabilize a power grid, a system has been proposed in which a self-excited converter (voltage source converter (VSC)) is combined with an energy storage system such as a storage battery and a large-capacity capacitor (see, for example, Japanese Patent Laying-Open No. 2001-197660 (PTL 1)). In the present disclosure, a self-excited converter is also referred to as bidirectional AC/DC converter.

### CITATION LIST

### PATENT LITERATURE

PTL 1: Japanese Patent Laying-Open No. 2001-197660

### SUMMARY OF INVENTION

### TECHNICAL PROBLEM

In order to stabilize a frequency of the power grid by using the above-described power grid stabilization system, it is necessary to release a large capacity of active power from the energy storage system to the power grid, or conversely, to absorb a large capacity of active power from the power grid by the energy storage system. However, a magnitude of the active power that can be transferred between the power grid stabilization system and the power grid is limited.

One reason for the above is that, in an energy storage system such as a storage battery and an electrical double layer capacitor (EDLC), a rated voltage and a current capacity can be increased by serial-parallel connection of unit elements of a low rated voltage, but a magnitude of the rated voltage is limited in order to ensure insulation and energy balance. Another reason is that the self-excited converter can operate only in a limited DC voltage range, whereas the energy storage system changes a DC voltage in accordance with a state of charge (SOC), and thus, it is necessary to increase a voltage variation range of the self-excited converter in order to increase charge and discharge energy. For the above reasons, power that can be transferred between the self-excited converter and the power grid is limited.

The present disclosure has been made in view of the above problems. An object of one aspect of the present disclosure is to enable transfer of higher power to and from an AC power grid in a power grid stabilization system combining an energy storage system and a self-excited converter.

### SOLUTION TO PROBLEM

A power grid stabilization system according to one embodiment includes a first energy storage system, a second energy storage system, a bidirectional AC/DC converter, and a first bidirectional DC/DC converter. Each of the first energy storage system and the second energy storage system includes a pair of input and output terminals, and is configured to store DC power input through the pair of input and output terminals as energy, and to output the stored energy as DC power through the pair of input and output terminals. An energy storage capacity of the second energy storage system is larger than an energy storage capacity of the first energy storage system. The bidirectional AC/DC converter is connected between an AC power grid and the pair of input and output terminals of the first energy storage system. The first bidirectional DC/DC converter is connected between the pair of input and output terminals of the first energy storage system and the pair of input and output terminals of the second energy storage system.

A power grid stabilization system of another embodiment includes at least one energy storage system, a plurality of bidirectional AC/DC converters, and a plurality of transformers. The at least one energy storage system is configured to store input DC power as energy and to output the stored energy as DC power. The plurality of bidirectional AC/DC converters are connected between an AC power grid and the at least one energy storage system. The plurality of transformers correspond to the plurality of bidirectional AC/DC converters, respectively. Each of the plurality of bidirectional AC/DC converters is connected to the AC power grid via a corresponding transformer among the plurality of transformers. Respective primary coils of the plurality of transformers are connected in series with each other. A secondary coil of each of the plurality of transformers is individually connected to a corresponding bidirectional AC/DC converter among the plurality of bidirectional AC/DC converters.

### ADVANTAGEOUS EFFECTS OF INVENTION

In the one embodiment described above, the second energy storage system having a larger energy storage capacity than the first energy storage system and the bidirectional DC/DC converter connected between the first energy storage system and the second energy storage system are provided. As a result, it is possible to transfer higher power between the power grid stabilization system and the AC power grid.

In the other embodiment described above, the provision of the plurality of bidirectional AC/DC converters enables transfer of higher power between the power grid stabilization system and the AC power grid.

### BRIEF DESCRIPTION OF DRAWINGS

Fig. 1 is a block diagram illustrating a basic configuration of a power grid stabilization system.
Fig. 2 is a block diagram illustrating an example of a hardware configuration of a control device in Fig. 1.
Fig. 3 is a functional block diagram illustrating an example of a control operation of the control device in Fig. 1.
Fig. 4 is a block diagram illustrating a configuration of a power grid stabilization system according to a first embodiment.
Fig. 5 is a functional block diagram illustrating an example of a control operation of a control device in Fig. 4.
Fig. 6 is a circuit diagram illustrating a configuration of a power grid stabilization system according to a second embodiment.
Fig. 7 is a timing chart illustrating an operation of the power grid stabilization system in Fig. 6(A).
Fig. 8 is a block diagram illustrating a configuration example of a power grid stabilization system according to a third embodiment.
Fig. 9 is a block diagram illustrating a configuration example of a power grid stabilization system according to a fourth embodiment.
Fig. 10 is a circuit diagram illustrating a configuration example of a submodule constituting a self-excited converter in Fig. 9.
Fig. 11 is a block diagram illustrating a modification of the power grid stabilization system in Fig. 9.
Fig. 12 is a block diagram illustrating a configuration example of a power grid stabilization system according to a fifth embodiment.
Fig. 13 is a diagram for describing a neutral point clamped (NPC) converter.
Fig. 14 is a block diagram illustrating a configuration of a first modification of the power grid stabilization system shown in Fig. 12.
Fig. 15 is a block diagram illustrating a configuration of a second modification of the power grid stabilization system shown in Fig. 12.
Fig. 16 is a block diagram illustrating a configuration of a third modification of the power grid stabilization system shown in Fig. 12.

### DESCRIPTION OF EMBODIMENTS

Hereinafter, embodiments will be described in detail with reference to the drawings. First, a power grid stabilization system including a single self-excited converter and a single energy storage system as a basis of each of the embodiments will be described below. Next, each embodiment in which this configuration is extended will be described in detail. In the following description, the same or corresponding parts are denoted by the same reference signs, and the description thereof may not be repeated.

### <Configuration as basis of each embodiment>

### [Basic configuration of power grid stabilization system]

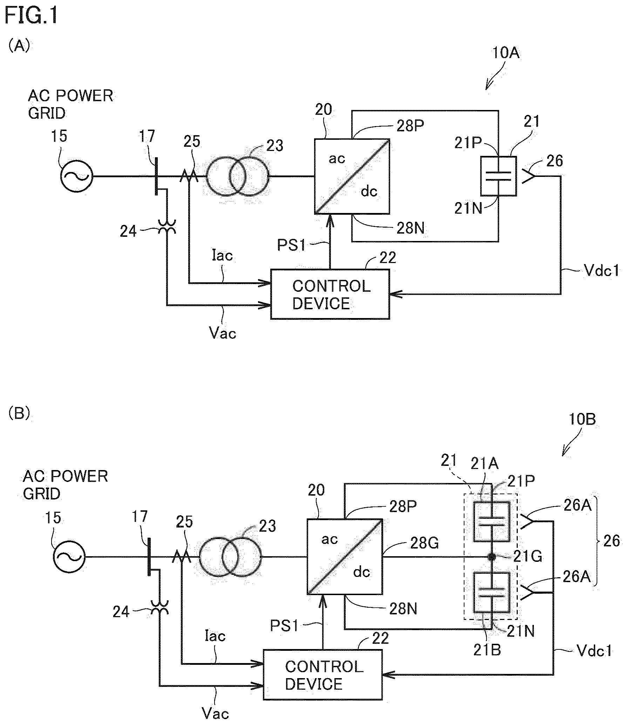

Fig. 1 is a block diagram illustrating a basic configuration of a power grid stabilization system. Fig. 1(A) illustrates a case where two connection terminals are provided on a DC side of a self-excited converter 20, and Fig. 1(B) illustrates a case where three connection terminals are provided on the DC side of self-excited converter 20. Since an AC side of self-excited converter 20 is connected to a three-phase AC system, three connection terminals for an α-phase, a b-phase, and a c-phase are provided. Fig. 1 shows only AC terminals for one phase, for simplicity.

Referring to Fig. 1(A), a power grid stabilization system 10A includes an energy storage system (ESS) 21, self-excited converter 20, a transformer 23, an AC voltage detector 24, an AC current detector 25, a DC voltage detector 26, and a control device 22. In this disclosure, self-excited converter 20 is also referred to as bidirectional AC/DC converter.

Energy storage system 21 is configured to store DC power input through a pair of input and output terminals (positive electrode terminal 21P and negative electrode terminal 21N) as energy and to output the stored energy as DC power. The energy stored in energy storage system 21 is utilized for frequency stabilization and load leveling of an AC power grid, and is further utilized as reserve power.

Specifically, energy storage system 21 includes a plurality of power storage elements connected in series and in parallel between positive electrode terminal 21P and negative electrode terminal 21N. Each of the power storage elements may be, for example, a large-capacity capacitor such as an electric double layer capacitor (EDLC) or a storage battery. Fig. 1 shows one power storage element symbolically.

Self-excited converter 20 is connected between an AC power grid 15 and energy storage system 21. Specifically, a pair of DC terminals (a positive DC terminal 28P and a negative DC terminal 28N) of self-excited converter 20 is respectively connected to the pair of input and output terminals (positive electrode terminal 21P and negative electrode terminal 21N) of energy storage system 21. Accordingly, a rated DC voltage of self-excited converter 20 and a rated voltage of energy storage system 21 are equal. An AC terminal of each phase of self-excited converter 20 is connected to a power line of a corresponding phase of AC power grid 15.

Self-excited converter 20 performs forward conversion for converting AC into DC and inverse conversion for converting DC into AC. Specifically, self-excited converter 20 converts AC power of AC power grid 15 into DC power and causes energy storage system 21 to absorb the DC power as charging energy. Conversely, self-excited converter 20 converts discharge energy of energy storage system 21 into AC power and releases the AC power to AC power grid 15.

Self-excited converter 20 includes a plurality of self-arc-extinguishing semiconductor elements used as switching elements. As the self-arc-extinguishing semiconductor element, for example, an insulated gate bipolar transistor (IGBT), a gate commutated turn-off (GCT) thyristor, or the like is used. Self-excited converter 20 may be any one of a two-level, three-level, or multilevel system, a modular multilevel converter (MMC) system, a transformer multiplexing system, a reactor parallel system, and a combination of the above.

Transformer 23 is connected between AC power grid 15 and self-excited converter 20. Transformer 23 boosts AC power output from self-excited converter 20 and outputs the AC power to AC power grid 15. Fig. 1 shows a single-phase transformer for simplicity, but Δ-Y connection, Δ-Δ connection, Δ-Δ-Y connection, or the like is used for connection of an actual three-phase transformer. In a case where self-excited converter 20 is configured to be capable of outputting a high-voltage AC voltage, such as the MMC system, an interconnection reactor may be provided instead of transformer 23.

AC voltage detector 24 detects an AC voltage Vac of an interconnection point 17 to AC power grid 15 of power grid stabilization system 10A. For example, a voltage transformer is used as AC voltage detector 24.

AC current detector 25 detects an AC current Iac flowing between interconnection point 17 and transformer 23. For example, a current transformer is used as AC current detector 25.

DC voltage detector 26 detects a DC voltage Vdc1 between the pair of input and output terminals (positive electrode terminal 21P and negative electrode terminal 21N) of energy storage system 21.

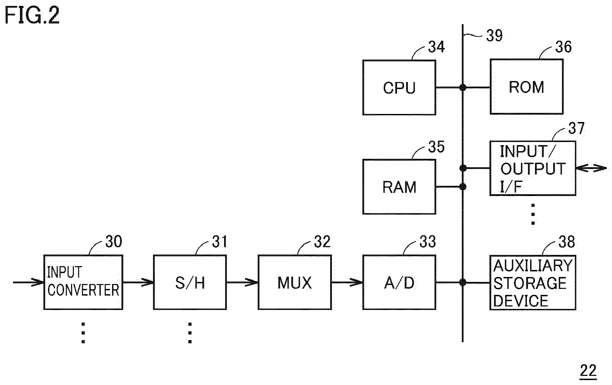

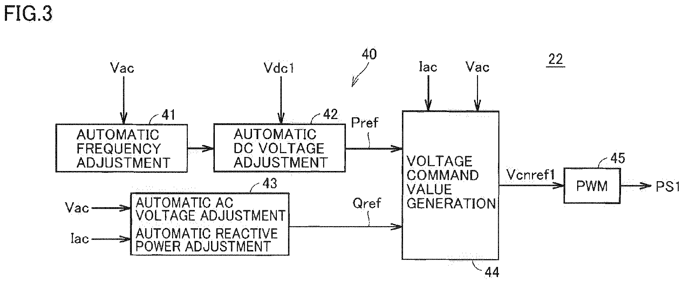

Control device 22 generates a control signal (pulse width modulation signal PS1) for controlling an operation of self-excited converter 20 on the basis of detected AC voltage Vac, AC current Iac, and DC voltage Vdc1. An example of a hardware configuration of control device 22 will be described later with reference to Fig. 2, and an example of a functional block of control device 22 will be described with reference to Fig. 3.

Next, a power grid stabilization system 10B in Fig. 1(B) will be described. As described above, self-excited converter 20 in Fig. 1(B) includes positive DC terminal 28P, negative DC terminal 28N, and a neutral DC terminal 28G.

Positive DC terminal 28P of self-excited converter 20 is connected to positive electrode terminal 21P of energy storage system 21, and negative DC terminal 28N is connected to negative electrode terminal 21N of energy storage system 21. Also, neutral DC terminal 28G of self-excited converter 20 is connected to a neutral terminal 21G of energy storage system 21. As shown in Fig 1(B), energy storage system 21 can also be considered to include a first energy storage system 21A connected between positive electrode terminal 21P and neutral terminal 21G and a second energy storage system 21B connected between neutral terminal 21G and negative electrode terminal 21N.

DC voltage detector 26 in Fig. 1(B) includes a first DC voltage detector 26A and a second DC voltage detector 26B. First DC voltage detector 26A detects a DC voltage of first energy storage system 21A. Second DC voltage detector 26B detects a DC voltage of second energy storage system 21B. DC voltage Vdc1, which is a sum of the detected DC voltages, is used for control.

Since the other points in Fig. 1(B) are similar to those in Fig. 1(A), the same or corresponding parts are denoted by the same reference signs, and the description thereof will not be repeated.

### [Example of hardware configuration of control device]

Fig. 2 is a block diagram illustrating an example of the hardware configuration of the control device in Fig. 1. Fig. 2 illustrates an example in which control device 22 is configured by a computer.

Referring to Fig. 2, control device 22 includes one or more input converters 30, one or more sample and hold (S/H) circuits 31, a multiplexer (MUX) 32, and an analog to digital (A/D) converter 33. Control device 22 further includes one or more central processing units (CPUs) 34, a random access memory (RAM) 35, and a read only memory (ROM) 36. Furthermore, control device 22 includes one or more input/output interfaces 37, an auxiliary storage device 38, and a bus 39 that interconnects the above-described components.

Input converter 30 has an auxiliary transformer (not shown) for each input channel. Each auxiliary transformer converts a detection signal by each electricity amount detector in Fig. 1 into a signal of a voltage level suitable for subsequent signal processing.

Sample and hold circuit 31 is provided for each input converter 30. Sample and hold circuit 31 samples and holds a signal representing an amount of electricity received from corresponding input converter 30 at a specified sampling frequency.

Multiplexer 32 sequentially selects the signals held in the plurality of sample and hold circuits 31. A/D converter 33 converts the signal selected by multiplexer 32 into a digital value. Note that by providing a plurality of A/D converters 33, A/D conversion may be executed in parallel for detection signals of a plurality of input channels.

CPU 34 controls control device 22 as a whole and executes calculation processing according to a program. RAM 35 as a volatile memory and ROM 36 as a nonvolatile memory are used as main storage of CPU 34. ROM 36 stores programs, setting values for signal processing, and the like. Auxiliary storage device 38 is a nonvolatile memory having a larger capacity than ROM 36, and stores a program, data of a detection value of an electricity amount, and the like.

Input/output interface 37 is an interface circuit for communication between CPU 34 and an external device.

Unlike the example of Fig. 2, at least a part of control device 22 can be configured with a circuit such as a field programmable gate array (FPGA) and an application specific integrated circuit (ASIC). That is, the function of each functional block illustrated in Fig. 2 can be configured on the basis of the computer exemplified in Fig. 2, or at least a part of the function can be configured with a circuit such as FPGA and ASIC. In addition, at least a part of the function of each functional block can be configured by an analog circuit.

### [Example of control operation of control device]

Fig. 3 is a functional block diagram illustrating an example of a control operation of the control device in Fig. 1. Referring to Fig. 3, control device 22 includes control modules 41 to 44 and a pulse width modulation (PWM) signal generator 45, as a control block 40 for controlling self-excited converter 20.

Control module 41 performs automatic frequency adjustment for bringing a detected fundamental wave frequency closer to a rated value on the basis of a fundamental wave frequency of AC power grid 15 obtained from AC voltage Vac. Control module 42 performs automatic DC voltage adjustment for bringing a detection value of DC voltage Vdc1 of energy storage system 21 closer to a DC voltage target value. In this case, the voltage target value decreases when active power is released to AC power grid 15, and the voltage target value increases when the active power is absorbed from AC power grid 15. An active power target value Pref is set by the automatic frequency adjustment and the automatic DC voltage adjustment.

On the basis of a detection value of AC voltage Vac, control module 43 performs automatic AC voltage adjustment for bringing the detection value of AC voltage Vac closer to the rated value. Furthermore, on the basis of a reactive power measurement value calculated from each of the detection values of AC voltage Vac and AC current Iac, control module 43 performs automatic reactive power adjustment to bring the reactive power measurement value closer to a target value. A reactive power target value Qref is set by the automatic AC voltage adjustment and the reactive power adjustment.

Control module 44 calculates an active current component and a reactive current component by variable-converting the detection values of three-phase AC current Iac. In a similar manner, control module 44 calculates an active voltage component and a reactive voltage component by variable-converting the detection values of three-phase AC voltage Vac. On the basis of the calculated active current component, reactive current component, active voltage component, and reactive voltage component, control module 44 generates a voltage command value Vcnref1 for each phase of self-excited converter 20 so as to obtain active power target value Pref and reactive power target value Qref.

PWM signal generator 45 generates PWM signal PS1 by comparing voltage command value Vcnref1 with a carrier signal. PWM signal PS1 thus generated is supplied to a control electrode of the self-arc-extinguishing semiconductor element constituting self-excited converter 20.

The configuration of control block 40 described above is an example, and the present disclosure is not limited to this configuration. For example, control block 40 of control device 22 may be configured as a virtual synchronous machine model that simulates a phenomenon unique to a synchronous generator, such as inertial force. In a case where self-excited converter 20 is configured by the MMC system, control block 40 is configured to perform control for suppressing variation in voltage (also referred to as capacitor voltage) of the power storage element in addition to the configuration in Fig. 3. Specifically, control module 44 for creating voltage command value Vcnref1 performs overcurrent protection, current control, average value control of the capacitor voltage, phase balance control of the capacitor voltage, balance control of the capacitor voltage between an upper arm and a lower arm, and the like on the basis of measurement values of the current and the voltage inside self-excited converter 20. These controls are known in the art and are not described and shown in detail here because a measurement signal and a control protection signal are different depending on a circuit system.

### First embodiment

In a power grid stabilization system 10E according to a first embodiment, a bidirectional DC/DC converter and a second energy storage system are added. The bidirectional DC/DC converter, which operates in a relatively wide input voltage range, can extract more energy from the second energy storage system. Hereinafter, a more detailed description will be given with reference to the drawings.

### [Configuration of power grid stabilization system]

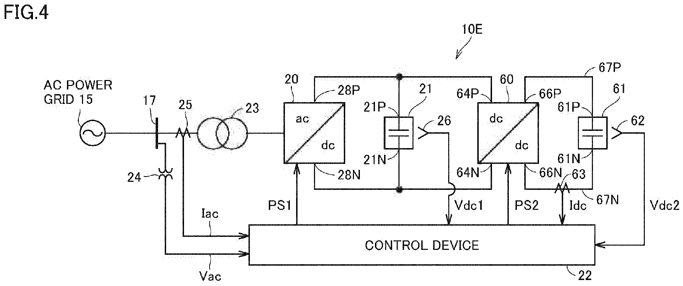

Fig. 4 is a block diagram illustrating a configuration of the power grid stabilization system according to the first embodiment. Referring to Fig. 4, power grid stabilization system 10E is different from power grid stabilization system 10A in Fig. 1(A) in that power grid stabilization system 10E further includes a bidirectional DC/DC converter 60, a second energy storage system 61, a DC voltage detector 62, and a DC current detector 63.

Bidirectional DC/DC converter 60 is a converter capable of bidirectionally converting DC power into DC power having a different voltage, and may be an isolated type or a non-isolated type, and a configuration thereof is not limited. A pair of primary-side terminals (a positive terminal 64P and a negative terminal 64N) of bidirectional DC/DC converter 60 is respectively connected to the pair of DC-side terminals (positive DC terminal 28P and negative DC terminal 28N) of self-excited converter 20, and is further connected to the pair of input and output terminals (positive electrode terminal 21P and negative electrode terminal 21N) of energy storage system 21. A pair of secondary-side terminals (a positive terminal 66P and a negative terminal 66N) of bidirectional DC/DC converter 60 is respectively connected to a pair of input and output terminals (a positive electrode terminal 61P and a negative electrode terminal 61N) of energy storage system 61 via DC wires 67P and 67N.

Each of the primary-side terminals and the secondary-side terminals of bidirectional DC/DC converter 60 may include three terminals further including a neutral terminal. In this case, the DC-side terminals of self-excited converter 20 also include three terminals.

Second energy storage system 61 has a larger energy storage capacity and can store more energy than first energy storage system 21. The structure of energy storage system 61 is similar to that of energy storage system 21. Specifically, energy storage system 61 includes a plurality of power storage elements connected in series and in parallel between positive electrode terminal 61P and negative electrode terminal 61N. Each power storage element may be, for example, a large-capacity capacitor such as an electric double layer capacitor or a storage battery. Fig. 4 shows one power storage element symbolically.

DC voltage detector 62 detects a DC voltage Vdc2 between positive electrode terminal 61P and negative electrode terminal 61N of energy storage system 61.

DC current detector 63 detects a DC current Idc flowing through DC wire 67N on a negative side between bidirectional DC/DC converter 60 and energy storage system 61. DC current detector 63 may detect a current flowing through DC wire 67P on a positive side instead of DC wire 67N on the negative side.

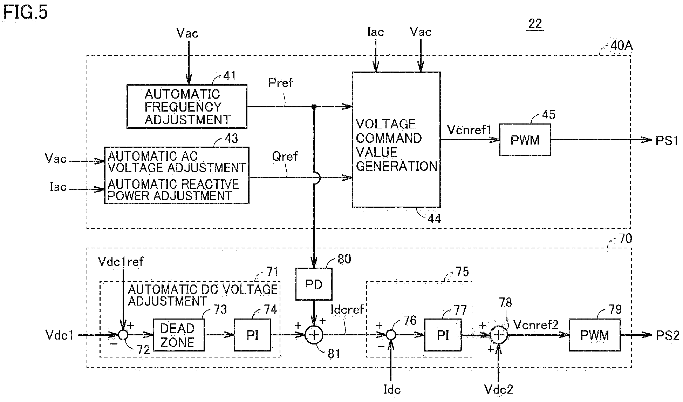

Control device 22 generates a control signal (PWM signal) PS2 for controlling an operation of bidirectional DC/DC converter 60 in addition to generating control signal (PWM signal) PS1 for controlling self-excited converter 20. Control device 22 generates PWM signal PS2 on the basis of detected DC voltage Vdc1, DC voltage Vdc2, and DC current Idc. PWM signal PS2 changes a duty ratio of a self-arc-extinguishing semiconductor element provided in bidirectional DC/DC converter 60. As a result, the operation of bidirectional DC/DC converter 60 can be controlled. An example of a specific functional block of control device 22 will be described later with reference to Fig. 5.

Since the other configurations in Fig. 4 are similar to those in Fig. 1(A), the same or corresponding parts are denoted by the same reference signs, and the description thereof will not be repeated.

### [Characteristics of operation of power grid stabilization system]

Next, characteristics of an operation of power grid stabilization system 10E will be described.

As described above, first energy storage system 21 has a smaller capacity than second energy storage system 61. Furthermore, self-excited converter 20 operates only in a narrow DC voltage range. Therefore, when bidirectional DC/DC converter 60 is not operating and only self-excited converter 20 is operating, a magnitude of power that can be input and output between first energy storage system 21 and AC power grid 15 is limited.

On the other hand, second energy storage system 61 can store more energy than first energy storage system 21. Furthermore, bidirectional DC/DC converter 60 operates in a relatively wide voltage range. Accordingly, bidirectional DC/DC converter 60 can cause more power to be released from second energy storage system 61 to AC power grid 15 and can cause more power to be absorbed from AC power grid 15 to second energy storage system 61.

As described above, bidirectional DC/DC converter 60 operates to transfer energy between energy storage system 21 and energy storage system 61. As a result, second energy storage system 61 can supply additional power to AC power grid 15 via first energy storage system 21 and absorb excess energy of AC power grid 15 via first energy storage system 21.

Furthermore, a time rate of change in power and current by self-excited converter 20 is larger than a time rate of change in power and current by bidirectional DC/DC converter 60. Thus, the capacity of energy storage system 21 is limited so that power and current can be input and output at a rate commensurate with the rate of change of power and current of self-excited converter 20. As a result, self-excited converter 20 and first energy storage system 21 can supply or absorb the active power at a high speed in response to a steep change in supply and demand of AC power grid 15. On the other hand, bidirectional DC/DC converter 60 and second energy storage system 61 supply or absorb a large capacity of active power in response to a relatively slow and large change in supply and demand of AC power grid 15.

### [Example of control operation of control device]

Fig. 5 is a functional block diagram illustrating an example of a control operation of the control device in Fig. 4. Referring to Fig 5, control device 22 includes a control block 40A for controlling self-excited converter 20 and a control block 70 for controlling bidirectional DC/DC converter 60.

Control block 40A in Fig. 5 differs from control block 40 in Fig. 3 in that control block 40A does not include control module 42 which performs automatic DC voltage adjustment. In the case of Fig. 5, the automatic DC voltage adjustment based on the detection value of DC voltage Vdc1 of energy storage system 21 is executed by control block 70. Therefore, active power target value Pref is set on the basis of a result of the automatic frequency adjustment.

Control block 70 includes control modules 71 and 75, adders 78 and 81, a PWM signal generator 79, and a proportional-derivative (PD) calculator 80. Note that a differentiation described below may be pseudo differentiation.

Control module 71 performs the automatic DC voltage adjustment for bringing the detection value of DC voltage Vdc1 of energy storage system 21 closer to a DC voltage target value Vdc1ref. DC voltage target value Vdc1ref is set to, for example, a median value of a voltage range in which self-excited converter 20 can operate.

Specifically, control module 71 includes a subtractor 72, a dead zone processor 73, and a proportional integral (PI) calculator 74. Subtractor 72 calculates a deviation between DC voltage target value Vdc1ref and the detection value of DC voltage Vdc1. When the calculated deviation is within a dead zone range, dead zone processor 73 replaces the calculated deviation with 0 and outputs the result. Proportional integral calculator 74 performs a proportional calculation and an integral calculation on output of dead zone processor 73, and adds and outputs the respective calculation results. As a result, a DC current target value Idcref is generated. Instead of the proportional integral calculation, a proportional integral derivative (PID) calculation may be performed, or another feedback calculator may be used.

In the configuration of control module 71, when the deviation between DC voltage target value Vdc1ref and the detection value of DC voltage Vdc1 is in the dead zone range, control module 71 outputs 0 as DC current target value Idcref. When the deviation is out of the dead zone range, control module 71 outputs DC current target value Idcref corresponding to the deviation.

As an auxiliary signal for accelerating the response of bidirectional DC/DC converter 60, an auxiliary signal based on active power target value Pref may be added to DC current target value Idcref. For this purpose, control block 70 is provided with proportional differential calculator 80 and adder 81. Proportional differential calculator 80 performs proportional calculation and differential calculation on active power target value Pref, and adds and outputs the respective calculation results. Adder 81 adds the output of control module 71 and the output of proportional differential calculator 80, and outputs the addition result to control module 75 as a final DC current target value Idcref.

Control module 75 performs calculation for bringing the detection value of DC current Idc closer to DC current target value Idcref. Specifically, control module 75 includes a subtractor 76 and a proportional-integral (PI) calculator 77. Subtractor 76 calculates a deviation between DC current target value Idcref and the detection value of DC current Idc. Proportional integral calculator 77 adds each calculation result of proportionality to the calculated deviation and outputs the result. Instead of the proportional integral calculation, a proportional integral derivative (PID) calculation may be performed, or another feedback calculator may be used. By providing such a minor feedback loop of DC current control, element breakdown can be prevented.

Adder 78 adds DC voltage Vdc2 of second energy storage system 61 to the output of control module 75 to generate a voltage command value Vcnref2 for controlling bidirectional DC/DC converter 60. Responsiveness can be increased by feeding forward DC voltage Vdc2.

PWM signal generator 79 generates PWM signal PS2 by comparing voltage command value Vcnref2 with a carrier signal. PWM signal PS2 thus generated is supplied to a control electrode of the self-arc-extinguishing semiconductor element constituting bidirectional DC/DC converter 60.

The configuration of control block 70 described above is an example, and the present disclosure is not limited to this configuration. For example, control module 71 which controls DC voltage Vdc1 may be provided not in control block 70 but in control block 40A which controls self-excited converter 20. In this case, calculation in control module 75 can be executed by using a value obtained by dividing active power target value Pref by DC voltage Vdc2 as DC current target value Idcref. In addition, a configuration without some or all of proportional differential calculator 80 for feeding forward active power target value Pref, control module 75 for minor feedback control of DC current Idc, and adder 78 for feeding forward DC voltage Vdc2 is also conceivable.

### [Effects of first embodiment]

As described above, power grid stabilization system 10E according to the first embodiment further includes bidirectional DC/DC converter 60 and second energy storage system 61. As a result, more active power can be supplied from second energy storage system 61 to AC power grid 15 via first energy storage system 21. Furthermore, an area required for the entire power grid stabilization system can be reduced as compared with a case where a large number of self-excited converters 20 are provided as in a fifth embodiment described later.

In addition, a combination of self-excited converter 20 and first energy storage system 21 having a relatively small capacity allows necessary active power to be supplied or absorbed at a high speed in response to a steep change in supply and demand of AC power grid 15. On the other hand, a combination of bidirectional DC/DC converter 60 and second energy storage system 61 having a relatively large capacity allows a large capacity of active power to be supplied or absorbed in response to a relatively slow and large change in supply and demand of AC power grid 15.

### Second embodiment

In a second embodiment, an example will be described in which bidirectional DC/DC converter 60 illustrated in Fig. 4 of the first embodiment is configured by bidirectional DC/DC converter 60 in which a boost chopper and a step-down chopper are combined.

### [Configuration of power grid stabilization system]

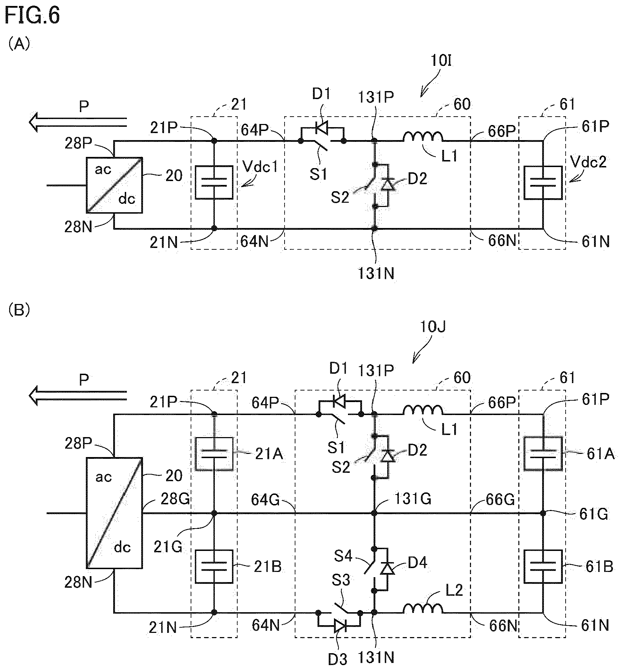

Fig. 6 is a circuit diagram illustrating a configuration of a power grid stabilization system according to the second embodiment. Fig. 6(A) shows a configuration in a case where all of the DC-side terminals of self-excited converter 20, the primary-side terminals of bidirectional DC/DC converter 60, and the secondary-side terminals of bidirectional DC/DC converter 60 are two terminals. Fig. 6(B) shows a configuration in a case where all of the DC-side terminals of self-excited converter 20, the primary-side terminals of bidirectional DC/DC converter 60, and the secondary-side terminals of bidirectional DC/DC converter 60 are three terminals.

In a power grid stabilization system 10I in Fig. 6(A), bidirectional DC/DC converter 60 of power grid stabilization system 10E in Fig. 4 is configured by bidirectional DC/DC converter 60 in which a boost chopper and a step-down chopper are combined. Other configurations in Fig. 6(A) are similar to those in Fig. 4, and thus will not be described again.

As shown in Fig. 6(A), bidirectional DC/DC converter 60 includes switching elements S1 and S2, diodes D1 and D2, and a reactor L1. Switching element S1 is connected between positive terminal 64P on a primary side and an intermediate node 131P between positive terminal 64P on the primary side and positive terminal 66P on a secondary side. Reactor L1 is connected between intermediate node 131P and positive terminal 66P on the secondary side. Switching element S2 is connected between intermediate node 131P on the positive side and a node 131N commonly connected to negative terminal 64N on the primary side and negative terminal 66N on the secondary side. Diodes D1 and D2 are provided corresponding to switching elements S1 and S2, respectively, and are connected in parallel to the corresponding switching elements and in a reverse bias direction.

In a case where bidirectional DC/DC converter 60 in Fig. 6(A) operates as a step-down chopper, switching element S1 is controlled to be in a switching state in which switching element S1 is repeatedly turned on and off, and switching element S2 is controlled to be in an open state. As a result, the energy stored in energy storage system 21 is transferred to energy storage system 61. On the other hand, in a case where bidirectional DC/DC converter 60 in Fig. 6(A) operates as a boost chopper, switching element S1 is controlled to be in the open state, and switching element S2 is controlled to be in the switching state in which switching element S2 is repeatedly turned on and off. As a result, the energy stored in energy storage system 61 is transferred to energy storage system 21. Therefore, DC voltage Vdc1 of energy storage system 21 is higher than DC voltage Vdc2 of energy storage system 61.

Next, a power grid stabilization system 10J in Fig. 6(B) differs from power grid stabilization system 10I in Fig. 6(A) in that all of the DC-side terminals of self-excited converter 20, the primary-side terminals of bidirectional DC/DC converter 60, and the secondary-side terminals of bidirectional DC/DC converter 60 include three terminals. A neutral terminal 64G on the primary side of bidirectional DC/DC converter 60 is connected to neutral terminal 21G of energy storage system 21 and neutral DC terminal 28G of self-excited converter 20. A neutral terminal 66G on the secondary side of bidirectional DC/DC converter 60 is connected to a neutral terminal 61G of energy storage system 61.

Specifically, bidirectional DC/DC converter 60 in Fig. 6(B) includes switching elements S1 to S4, diodes D1 to D4, and reactors L1 and L2. Switching element S1 is connected between positive terminal 64P on a primary side and an intermediate node 131P between positive terminal 64P on the primary side and positive terminal 66P on a secondary side. Reactor L1 is connected between intermediate node 131P and positive terminal 66P on the secondary side. Switching element S2 is connected between intermediate node 131P on the positive side and an intermediate node 131G commonly connected to neutral terminal 64G on the primary side and neutral terminal 66G on the secondary side. Switching element S3 is connected between negative terminal 64N on the primary side and intermediate node 131N between negative terminal 64N on the primary side and negative terminal 66N on the secondary side. Reactor L2 is connected between intermediate node 131N and negative terminal 66N on the secondary side. Switching element S4 is connected between neutral intermediate node 131G and intermediate node 131N on the negative side. Diodes D1 to D4 are provided corresponding to switching elements S1 to S4, respectively, and are connected in parallel to the corresponding switching elements and in the reverse bias direction.

In a case where bidirectional DC/DC converter 60 in Fig. 6(B) operates as a step-down chopper, switching elements S1 and S3 are controlled to be in the switching state in which switching elements S1 and S3 are repeatedly turned on and off, and switching elements S2 and S4 are controlled to be in the open state. As a result, the energy stored in energy storage system 21 is transferred to energy storage system 61. On the other hand, in a case where bidirectional DC/DC converter 60 in Fig. 6(B) operates as a boost chopper, switching elements S1 and S3 are controlled to be in the open state, and switching elements S2 and S4 are controlled to be in the switching state in which switching elements S2 and S4 are repeatedly turned on and off. As a result, the energy stored in energy storage system 61 is transferred to energy storage system 21. Therefore, DC voltage Vdc1 of energy storage system 21 is higher than DC voltage Vdc2 of energy storage system 61. Note that switching elements S1 and S2 on the upper side and switching elements S3 and S4 on the lower side in Fig. 6(B) may operate independently.

### [Operation of power grid stabilization system]

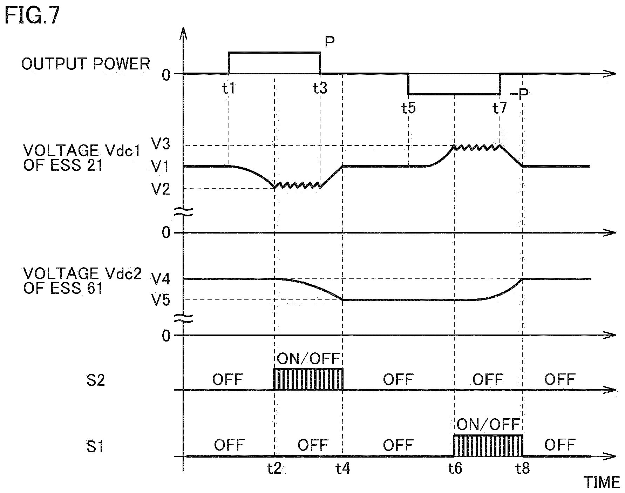

Fig. 7 is a timing chart illustrating the operation of the power grid stabilization system in Fig. 6(A). Hereinafter, the operation of power grid stabilization system 10I in Fig. 6 (A) will be described with reference to the block diagram of Fig. 4 and the timing chart of Fig. 7.

At time t1 in Fig. 7, control device 22 operates self-excited converter 20 to control self-excited converter 20 to supply active power P from power grid stabilization system 10I to AC power grid 15. As a result, since energy is released from energy storage system 21, DC voltage Vdc1 of energy storage system 21 decreases from V1. At this time point, both switching elements S1 and S2 are in an OFF state (open state), and bidirectional DC/DC converter 60 is not operating.

When DC voltage Vdc1 of energy storage system 21 reaches a lower threshold value V2 at next time t2, control device 22 controls switching element S2 of bidirectional DC/DC converter 60 to be in the switching state. Therefore, bidirectional DC/DC converter 60 starts a conversion operation as a boost chopper, and energy is transferred from energy storage system 61 to energy storage system 21. As a result, DC voltage Vdc2 of energy storage system 61 gradually decreases.

At next time t3, control device 22 stops self-excited converter 20 to control self-excited converter 20 to stop the supply of active power P from power grid stabilization system 10I to AC power grid 15. At this time point, since bidirectional DC/DC converter 60 is operating as a boost chopper, energy storage system 21 receives energy from energy storage system 61, and thus, DC voltage Vdc1 rises.

When DC voltage Vdc1 of energy storage system 21 reaches a voltage target value V1 at next time t4, control device 22 stops switching of switching element S2. Accordingly, bidirectional DC/DC converter 60 ends the conversion operation. As a result, the value of DC voltage Vdc1 of energy storage system 21 is maintained at voltage V1, and the value of DC voltage Vdc2 of energy storage system 61 is maintained at a voltage V5. Note that DC/DC converter 60 may end the conversion operation when the value of DC voltage Vdc1 returns to a predetermined operation end range within the dead zone range instead of when the value of DC voltage Vdc1 matches voltage target value V1 within the dead zone range.

At next time t5, control device 22 operates self-excited converter 20 to control self-excited converter 20 to absorb active power P from AC power grid 15 to power grid stabilization system 10I (that is, to output -P to AC power grid 15.). As a result, since the energy is absorbed by energy storage system 21, DC voltage Vdc1 of energy storage system 21 increases from V5. At this time point, both switching elements S1 and S2 are in an OFF state (open state), and bidirectional DC/DC converter 60 is not operating.

When DC voltage Vdc1 of energy storage system 21 reaches an upper threshold value V3 at next time t6, control device 22 controls switching element S1 of bidirectional DC/DC converter 60 to be in the switching state. Therefore, bidirectional DC/DC converter 60 starts a conversion operation as a step-down chopper, and energy is transferred from energy storage system 21 to energy storage system 61. As a result, DC voltage Vdc2 of energy storage system 61 gradually increases.

At next time t7, control device 22 stops self-excited converter 20 to control self-excited converter 20 to stop the absorption of active power P from AC power grid 15 to power grid stabilization system 10I. At this time point, since bidirectional DC/DC converter 60 is operating as a step-down chopper, energy storage system 21 transfers energy to energy storage system 61, and thus, DC voltage Vdc1 decreases.

When DC voltage Vdc1 of energy storage system 21 reaches a voltage target value V1 at next time t8, control device 22 stops switching operation of switching element S1. Accordingly, bidirectional DC/DC converter 60 ends the conversion operation. As a result, the value of DC voltage Vdc1 of energy storage system 21 is maintained at voltage V1, and the value of DC voltage Vdc2 of energy storage system 61 is maintained at a voltage V4. Note that DC/DC converter 60 may end the conversion operation when the value of DC voltage Vdc1 returns to a predetermined operation end range within the dead zone range instead of when the value of DC voltage Vdc1 matches voltage target value V1 within the dead zone range.

### [Effects of second embodiment]

In the control operation of control device 22, a range from lower threshold value V2 to upper threshold value V3 of the value of DC voltage Vdc1 of energy storage system 21 corresponds to the dead zone range. Voltage target value V1 corresponds to a median value of the dead zone range. While the value of DC voltage Vdc1 of energy storage system 21 is in the dead zone range, control device 22 does not operate bidirectional DC/DC converter 60, and causes input and output of energy between energy storage system 21 and AC power grid 15. As described above, since bidirectional DC/DC converter 60 does not operate continuously, a loss due to bidirectional DC/DC converter 60 can be reduced.

### Third embodiment

In a third embodiment, a power grid stabilization system 10F including a plurality of bidirectional DC/DC converters 60 will be described.

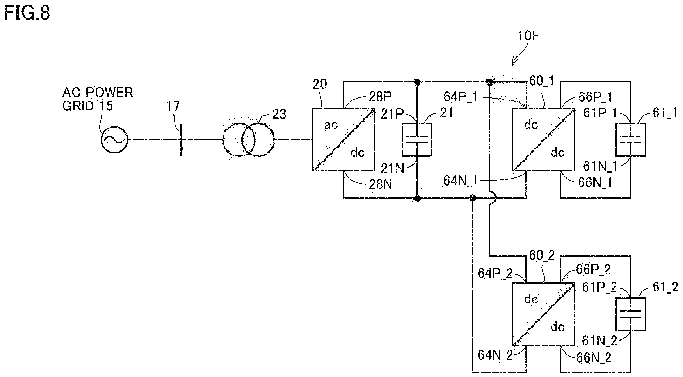

Fig. 8 is a block diagram illustrating a configuration example of the power grid stabilization system according to the third embodiment. Power grid stabilization system 10F in Fig. 3 is different from power grid stabilization system 10E of Fig. 4 in that power grid stabilization system 10F includes a plurality of bidirectional DC/DC converters 60 (60_1 and 60_2) and a plurality of energy storage systems 61 (61_1 and 61_2). In Fig. 3, two bidirectional DC/DC converters 60 are provided, but a larger number of bidirectional DC/DC converters 60 may be provided.

A pair of primary-side terminals 64P_1 and 64N_1 of bidirectional DC/DC converter 60_1 and a pair of primary-side terminals 64P_2 and 64N_2 of bidirectional DC/DC converter 60_2 are respectively connected to a pair of input and output terminals (positive electrode terminal 21P and negative electrode terminal 21N) of common energy storage system 21. A pair of secondary-side terminals 66P_i and 66 N_i (i = 1 and 2) of bidirectional DC/DC converter 60_i is respectively connected to a pair of input and output terminals (positive electrode terminal 61P_i and negative electrode terminal 61N_i) of corresponding energy storage system 61_i. Note that the pairs of secondary-side terminals of the plurality of bidirectional DC/DC converters 60 may be connected to common energy storage system 61.

As described above, power grid stabilization system 10F according to the third embodiment, which is provided with the plurality of bidirectional DC/DC converters 60, it is possible to input and output a larger capacity of active power between AC power grid 15 and power grid stabilization system 10F.

### Fourth embodiment

In a fourth embodiment, a case where the MMC system is used as a self-excited converter will be described. In a case where a high-voltage self-excited converter such as an MMC is used, it is not possible to use the configuration as shown in Fig. 1 in which the energy storage system is directly connected to the self-excited converter. This is because the rated voltage of the energy storage system is limited. Therefore, as described in the first to third embodiments, the energy storage system is connected to the self-excited converter via the bidirectional DC/DC converter. Since energy can be stored in the power storage element of each submodule constituting the MMC, it is not necessary to further provide an energy storage system between the self-excited converter and the bidirectional DC/DC converter. Hereinafter, a detailed description will be given with reference to the drawings.

### [Configuration example of power grid stabilization system]

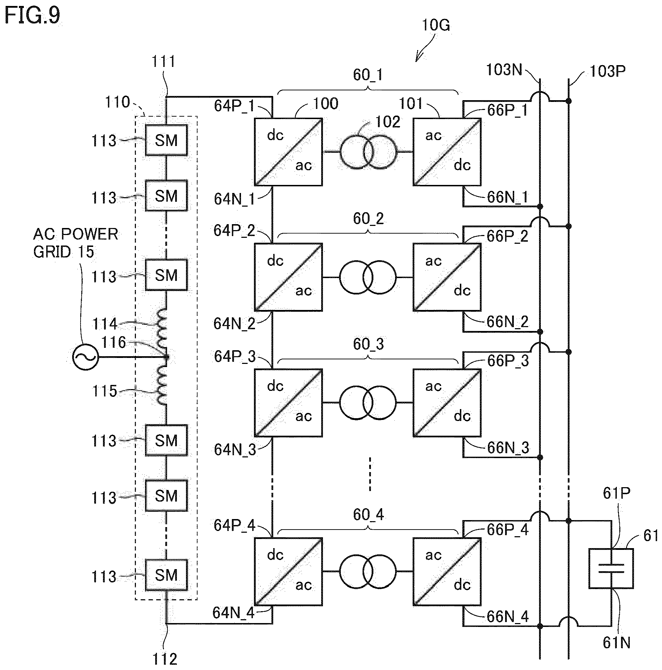

Fig. 9 is a block diagram illustrating a configuration example of the power grid stabilization system according to the fourth embodiment. Referring to Fig. 9, a power grid stabilization system 10G includes a self-excited converter 110 of the MMC system, a plurality of bidirectional DC/DC converters 60_1 to 60_4, and energy storage system 61. Self-excited converter 110 of the MMC system corresponds to a combination of self-excited converter 20 and energy storage system 21 in Fig. 4. A positive DC terminal 111 and a negative DC terminal 112 of self-excited converter 110 respectively correspond to the pair of input and output terminals (positive electrode terminal 21P and negative electrode terminal 21N) of energy storage system 21 in Fig. 4.

Although Fig. 9 illustrates a configuration of only one phase as self-excited converter 110, three phases are actually provided in parallel. In addition, Fig. 9 shows four bidirectional DC/DC converters 60, but a larger number of bidirectional DC/DC converters 60 may be provided, and the number of bidirectional DC/DC converters 60 is not limited.

Self-excited converter 110 includes a plurality of submodules 113 connected in cascade in an upper arm between positive DC terminal 111 and an AC terminal 116, and a plurality of submodules 113 connected in cascade in a lower arm between negative DC terminal 112 and AC terminal 116. Self-excited converter 110 further includes reactors 114 and 115 respectively connected in series to submodules 113 in the upper arm and the lower arm.

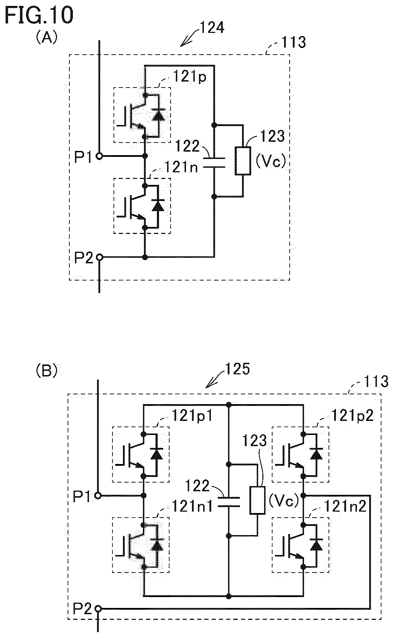

Submodule 113 is used as a unit converter. Submodule 113 is also referred to as converter cell. A detailed configuration of submodule 113 will be described later with reference to Fig. 10.

AC terminal 116 is connected to a corresponding phase of AC power grid 15. A transformer or an interconnection reactor (both not shown) is provided between AC terminal 116 and AC power grid 15. Instead of AC terminal 116, a primary coil may be provided in series with the upper arm and the lower arm, and self-excited converter 110 may be connected to AC power grid 15 in an AC manner via a secondary coil magnetically coupled with the primary coil. In this case, one of reactor 114 or reactor 115 may be the primary coil.

Respective pairs of primary-side terminals (positive terminal 64P and negative terminal 64N) of bidirectional DC/DC converters 60_1 to 60_4 are connected in series to each other between positive DC terminal 111 and negative DC terminal 112 of power grid stabilization system 10. Each pair of secondary-side terminals (positive terminal 66P and negative terminal 66N) of bidirectional DC/DC converters 60_1 to 60_4 is connected in parallel to the pair of input and output terminals (positive electrode terminal 61P and negative electrode terminal 61N) of energy storage system 61 via connection wires 103P and 103N, respectively.

Furthermore, in the example in Fig. 9, each bidirectional DC/DC converter 60 is configured by a dual active bridge (DAB) type. Specifically, each bidirectional DC/DC converter 60 includes a bidirectional AC/DC converter 100 on the primary side, a bidirectional AC/DC converter 101 on the secondary side, and a transformer 102. For example, a full bridge system is used as bidirectional AC/DC converters 100 and 101. Transformer 102 is connected between an AC-side terminal of bidirectional AC/DC converter 100 on the primary side and an AC-side terminal of AC/DC converter 101 on the secondary side.

### [Configuration example of submodule]

Fig. 10 is a circuit diagram illustrating a configuration example of the submodule constituting the self-excited converter in Fig. 9.

Submodule 113 shown in (A) of Fig. 10 has a circuit configuration 124 called a half-bridge configuration. Submodule 113 includes a series combination formed by connecting two switching elements 121p and 121n in series, a power storage element 122, a voltage detector 123, and a pair of input and output terminals P1 and P2. The series combination of switching elements 121p and 121n and power storage element 122 are connected in parallel. Voltage detector 123 detects a voltage Vc across power storage element 122.

Both terminals of switching element 121n are connected to the pair of input and output terminals P1 and P2, respectively. Submodule 113 outputs voltage Vc of power storage element 122 or 0 voltage between the pair of input and output terminals P1 and P2 by switching operation of switching elements 121p and 121n. When switching element 121p is turned on and switching element 121n is turned off, voltage Vc of power storage element 122 is output from submodule 113. When switching element 121p is turned off and switching element 121n is turned on, submodule 113 outputs 0 voltage.

Submodule 113 shown in (B) of Fig. 10 has a circuit configuration 125 called a full-bridge configuration. Submodule 113 includes a first series combination formed by connecting two switching elements 121p1 and 121n1 in series, a second series combination formed by connecting two switching elements 121p2 and 121n2 in series, power storage element 122, voltage detector 123, and the pair of input and output terminals P1 and P2. The first series combination, the second series combination, and power storage element 122 are connected in parallel. Voltage detector 123 detects a voltage Vc across power storage element 122.

A midpoint of switching element 121p1 and switching element 121n1 is connected to input and output terminal P1. In a similar manner, a midpoint of switching element 121p2 and switching element 121n2 is connected to input and output terminal P2. Submodule 113 outputs voltage Vc, -Vc of power storage element 122, or 0 voltage between input and output terminals P1 and P2 by switching operation of switching elements 121p1, 121n1, 121p2, and 121n2.

In (A) and (B) of Fig. 10, switching elements 121p, 121n, 121p1, 121n1, 121p2, and 121n2 are configured such that a freewheeling diode (FWD) is connected in anti-parallel to a self-arc-extinguishing semiconductor switching element such as an insulated gate bipolar transistor (IGBT) or a gate commutated turn-off (GCT) thyristor.

In (A) and (B) of Fig. 10, a capacitor such as a film capacitor is mainly used for power storage element 122. Power storage element 122 may be referred to as capacitor in the following description. Hereinafter, voltage Vc of power storage element 122 is also referred to as capacitor voltage Vc.

As shown in Fig. 1, submodules 113 are cascaded. In each of (A) and (B) of Fig. 10, in submodule 113 disposed in the upper arm, input and output terminal P1 is connected to input and output terminal P2 of adjacent submodule 113 or positive DC terminal 111, and input and output terminal P2 is connected to input and output terminal P1 of adjacent submodule 113 or AC terminal 116. In a similar manner, in submodule 113 disposed in the lower arm, input and output terminal P1 is connected to input and output terminal P2 of adj acent submodule 113 or AC terminal 116, and input and output terminal P2 is connected to input and output terminal P1 of adjacent submodule 113 or negative DC terminal 112.

Submodules other than the configurations exemplified above, for example, submodules to which a circuit configuration called a clamped double cell or the like is applied may be used, and the switching element and the power storage element are not limited to the above examples.

### [Modification of power grid stabilization system]

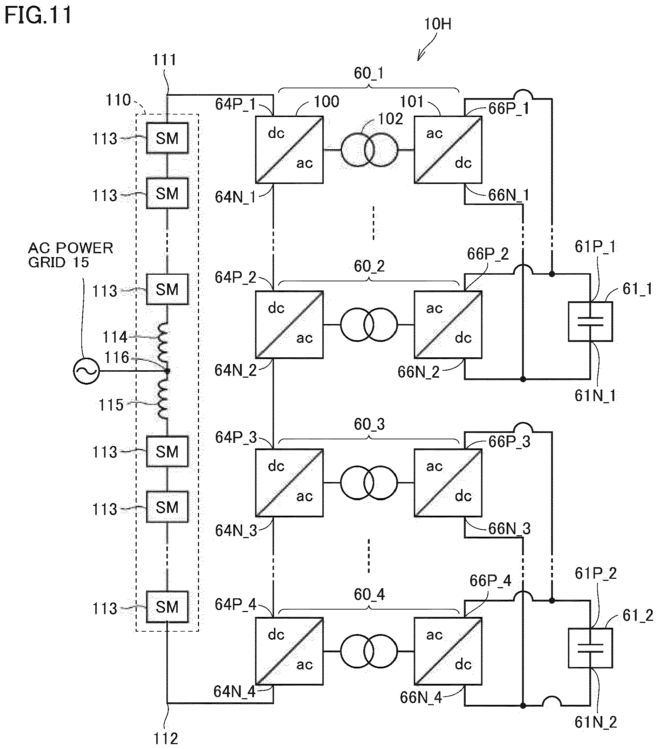

Fig. 11 is a block diagram illustrating a modification of the power grid stabilization system in Fig. 9. A power grid stabilization system 10H in Fig. 11 is different from power grid stabilization system 10G in Fig. 9 in that power grid stabilization system 10H includes the plurality of energy storage systems 61_1 and 61_2. The pair of input and output terminals (positive electrode terminal 61P and negative electrode terminal 61N) of energy storage system 61_1 is connected to the pair of secondary-side terminals (positive terminal 66P and negative terminal 66N) of each of bidirectional DC/DC converters 60_1 and 60_2. The pair of input and output terminals (positive electrode terminal 61P and negative electrode terminal 61N) of energy storage system 61_2 is connected to the pair of secondary-side terminals (positive terminal 66P and negative terminal 66N) of each of bidirectional DC/DC converters 60_3 and 60_4.

By reducing the number of bidirectional DC/DC converters 60 connected in parallel to each energy storage system 61 as described above, the probability of a fault in which energy storage system 61 is damaged by a short circuit current can be reduced.

### [Effects of fourth embodiment]

As described above, a case has been described where power grid stabilization systems 10G and 10H according to the fourth embodiment are provided with self-excited converter 110 of the MMC system. In this case, power grid stabilization systems 10G and 10H include the plurality of bidirectional DC/DC converters 60. The respective pairs of primary-side terminals of the plurality of bidirectional DC/DC converters 60 are connected in series between positive DC terminal 111 and negative DC terminal 112 of self-excited converter 110. In addition, the pair of secondary-side terminals of each bidirectional DC/DC converter 60 is connected in parallel to the pair of input and output terminals (positive electrode terminal 61P and negative electrode terminal 61N) of energy storage system 61. In this configuration, as in the first to third embodiments, a larger capacity of active power can be transferred between AC power grid 15 and power grid stabilization systems 10G and 10H.

### Fifth embodiment

In the fifth embodiment, a case where power grid stabilization system 10C includes the plurality of self-excited converters 20 will be described. As a result, even if the rated voltage of energy storage system 21 is limited to a relatively low value, more power can be supplied to AC power grid 15. Hereinafter, a detailed description will be given with reference to the drawings.

### [Configuration of power grid stabilization system]

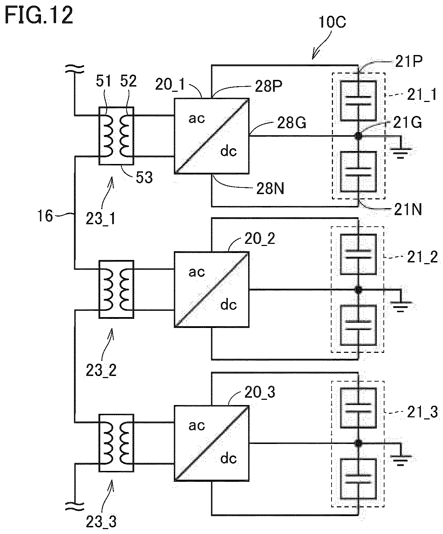

Fig. 12 is a block diagram illustrating a configuration example of the power grid stabilization system according to the fifth embodiment. Referring to Fig. 12, power grid stabilization system 10C includes a plurality of (three in Fig. 12 as an example) self-excited converters 20_1 to 20_3, three transformers 23_1 to 23_3, and three sets of energy storage systems 21A_1, 21B_1 to 21A_3, and 21B_3.

For ease of illustration, AC voltage detector 24, AC current detector 25, DC voltage detector 26, and control device 22 are not shown in Fig. 12. These configurations, which are similar to those described with reference to Figs. 1 to 3, will not be described again (however, supplementary explanation on control device 22 will be described later).

Transformer 23 and its connection wire of each phase of a three-phase AC circuit are provided for each phase on the AC side of self-excited converter 20, but the illustration is shown for only one phase in Fig. 12 for ease of illustration. Specifically, a pair of AC terminals of an i-th (i = 1 to 3) self-excited converter 20_i is connected to a secondary coil 52 of a corresponding i-th transformer 23_i. Respective primary coils 51 of transformers 23 are connected to a power line 16 of AC power grid 15 in series with each other. Primary coil 51 and secondary coil 52 of each transformer 23 are wound around an iron core (core) 53 individually provided for each transformer 23.

Three connection terminals (positive DC terminal 28P, negative DC terminal 28N, and neutral DC terminal 28G) are provided on the DC side of each self-excited converter 20. As described with reference to Fig. 1 (B), positive DC terminal 28P of i-th (i = 1 to 3) self-excited converter 20_i is connected to positive electrode terminal 21P of an i-th energy storage system 21_i. Negative DC terminal 28N of i-th self-excited converter 20_i is connected to negative electrode terminal 21N of i-th energy storage system 21_i. Neutral DC terminal 28G of i-th self-excited converter 20_i is connected to neutral terminal 21G of i-th energy storage system 21_i. Neutral terminal 21G of self-excited converter 20 is connected to a common ground pole. In order to suppress a fault current in an event of a ground fault of a DC terminal, an impedance element may be provided between neutral terminal 21G of self-excited converter 20 and the ground pole.

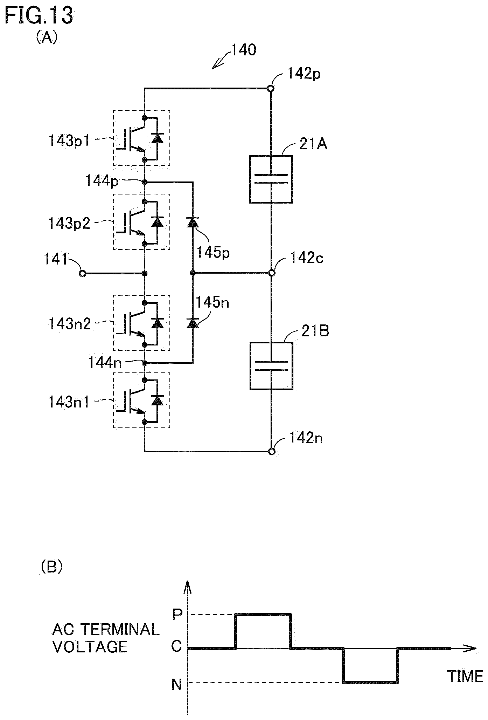

A typical example of such self-excited converter 20 is a converter of a neutral point clamped (NPC) system. Fig. 13 is a diagram for describing an NPC converter. Fig. 13(A) is a circuit diagram of an NPC converter 140, and Fig. 13(B) shows an example of an AC terminal voltage in NPC converter 140.

As shown in Fig. 13(A), NPC converter 140 includes four semiconductor switching elements 143p1, 143p2, 143n1, and 143n2 and two clamp diodes 145p and 145n. Semiconductor switching elements 143p1 and 143p2 are connected in series in this order between positive electrode terminal 142p and AC terminal 141. Semiconductor switching elements 143n1 and 143n2 are connected in series in this order between negative electrode terminal 142n and AC terminal 141. A freewheel diode is connected in anti-parallel to each of semiconductor switching elements 143p1, 143p2, 143n1, and 143n2. Clamp diode 145p is connected in the reverse bias direction between a midpoint 144p between semiconductor switching element 143p1 and semiconductor switching element 143p2 and a neutral terminal 142c. Clamp diode 145n is connected in the reverse bias direction between a midpoint 144n between semiconductor switching element 143n1 and semiconductor switching element 143n2 and neutral terminal 142c. Energy storage system 21A is connected between positive electrode terminal 142p and neutral terminal 142c, and energy storage system 21B is connected between neutral terminal 142c and negative electrode terminal 142n.

As shown in Fig. 13(B), by controlling turning on and off of four semiconductor switching elements 143p1, 143p2, 143n1, and 143n2 constituting NPC converter 140, a voltage generated in AC terminal 141 can be switched to any of a voltage P of positive electrode terminal 142p, voltage C of neutral terminal 142c, or a voltage N of negative electrode terminal 142n. Furthermore, in the NPC system, output waveforms of self-excited converters 20 are shifted little by little, and the output waveforms are synthesized on primary coils 51 of the plurality of transformers 23_1, 23_2, and 23_3, and thus, harmonics of an output voltage can be reduced.

As described with reference to Fig. 1(A), only two connection terminals (positive DC terminal 28P and negative DC terminal 28N) may be provided on the DC side of each self-excited converter 20. In this case, a positive DC terminal 28P_i and a negative DC terminal 28 N_i of i-th self-excited converter 20_i are respectively connected to positive electrode terminal 21P and negative electrode terminal 21N of i-th energy storage system 21_i. Each energy storage system 21 is not provided with neutral terminal 21G.

Note that common energy storage system 21 may be connected to the DC side of the plurality of self-excited converters 20. That is, the DC-side terminals of the plurality of corresponding self-excited converters 20 are connected in parallel to common energy storage system 21. In this case, interconnected energy storage system 21 and each self-excited converter 20 have an equal rated DC voltage.

The output voltages of the plurality of self-excited converters 20 are synthesized on primary coil 51 of each transformer 23, that is, on power line 16 to be increased in voltage. Therefore, the rated voltage of each self-excited converter 20 can be configured to be lower than the voltage of power line 16. Furthermore, the rated voltage of energy storage system 21, which is directly connected to the DC-side terminal of each self-excited converter 20, can be configured to be lower in a similar manner.

Here, the rated voltage of self-excited converter 20 is determined from a withstand voltage of semiconductor switching element 143, and is generally about half the withstand voltage of switching element 143 in consideration of a surge voltage generated at the time of switching and a margin. Withstand voltages of IGBTs, GCTs, and the like used as switching elements are currently about 6.5 kV, and therefore ±3 kV, which is about half of the withstand voltages, is defined as an example of the rated voltage of self-excited converter 20.

### [Configuration of modification of power grid stabilization system]

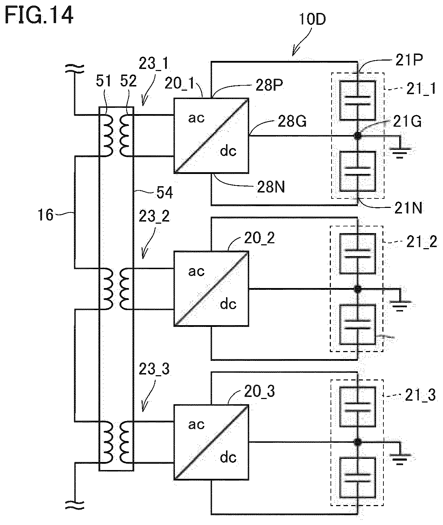

Fig. 14 is a block diagram illustrating a configuration of a first modification of the power grid stabilization system shown in Fig. 12. A power grid stabilization system 10D in Fig. 14 is different from power grid stabilization system 10C in Fig. 12 in that primary coil 51 and secondary coil 52 of each of the plurality of (three in Fig. 14 as an example) transformers 23_1 to 23_3 are configured to wind around an iron core 54 common to the plurality of transformers. Since the other points in Fig. 14 are common to those in Fig. 12, the same or corresponding parts are denoted by the same reference signs, and the description thereof will not be repeated.

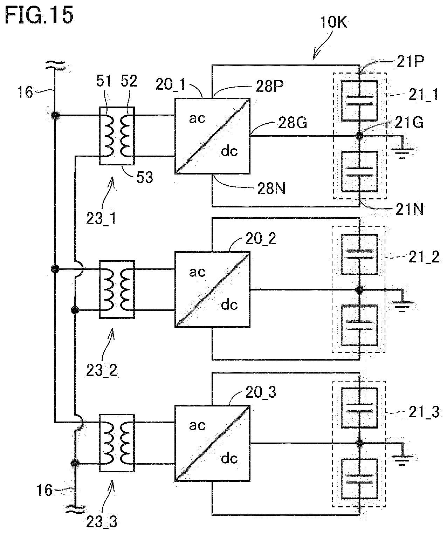

Fig. 15 is a block diagram illustrating a configuration of a second modification of the power grid stabilization system shown in Fig. 12. A power grid stabilization system 10K in Fig. 15 is different from power grid stabilization system 10C in Fig. 12 in that primary coils 51 of the plurality of (three in Fig. 15 as an example) transformers 23_1 to 23_3 are connected to power line 16 of AC power grid 15 in parallel to each other. Since the other points in Fig. 15 are similar to those in Fig. 12, the same or corresponding parts are denoted by the same reference signs, and the description thereof will not be repeated. As described with reference to Fig. 14, primary coil 51 and secondary coil 52 of each of transformers 23_1 to 23_3 may be configured to wind around iron core 54 common to the plurality of transformers.

In power grid stabilization system 10K having the configuration in Fig. 15, since the outputs of respective primary sides of the plurality of transformers 23 are connected not in series but in parallel, the voltage of the primary side of each transformer 23 is lower than that in power grid stabilization system 10C in Fig. 12. Therefore, depending on a voltage level of power line 16, a transformer for boosting may be further required between transformers 23_1 to 23_3 and power line 16. However, since a voltage level to ground of each transformer 23 is lower than that of power grid stabilization system 10C in Fig. 12, the scale of the entire system can be configured to be small.

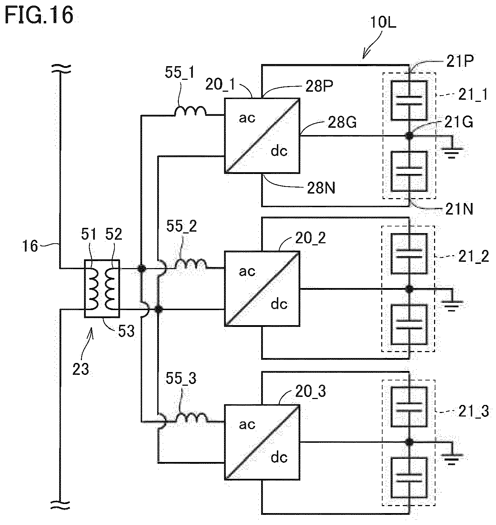

Fig. 16 is a block diagram illustrating a configuration of a third modification of the power grid stabilization system shown in Fig. 12. A power grid stabilization system 10L in Fig. 16 is different from power grid stabilization system 10C in Fig. 12 in that AC-side terminals of the plurality of (three in the case of Fig. 15 as an example) self-excited converters 20_1 to 20_3 are connected to secondary coil 52 of common transformer 23 in parallel to each other via respective reactors 55_1 to 55_3. Primary coil 51 of common transformer 23 is connected to power line 16 of AC power grid 15.

Reactors 55_1 to 55_3 are required to prevent an AC current from flowing between power grid stabilization systems 10_1 to 20_3. When the voltage level of power line 16 is relatively low, the AC-side terminals of the plurality of self-excited converters 20_1 to 20_3 can be connected to power line 16 in parallel to each other via respective reactors 55_1 to 55_3 without providing transformer 23 for boosting. Since the other points in Fig. 16 are similar to those in Fig. 12, the same or corresponding parts are denoted by the same reference signs, and the description thereof will not be repeated.

In power grid stabilization system 10L having the configuration in Fig. 16, depending on the voltage level of power line 16, it is necessary to provide transformer 23 for boosting between power line 16 and reactors 55_1 to 55_3 as shown in Fig. 16. However, it is possible to connect one transformer 23, which is fewer, to the plurality of reactors 55_1 to 55_3. In addition, since each reactor 55 can be configured with a rated voltage lower than the voltage of power line 16, the scale of each reactor 55 can be reduced. Therefore, the scale of the entire system can be reduced.

### [Control device]

In each of Figs. 12, 14, 15, and 16, control device 22 (not shown) is individually provided for each of the plurality of self-excited converters 20_1 to 20_3. Self-excited converter 20 is controlled by a control module mounted on control device 22. An example of the control operation is the automatic frequency adjustment control described with reference to Fig. 3. Another example of the control operation is control based on a virtual synchronous machine model that simulates a phenomenon unique to a synchronous generator such as an inertial force. The present embodiment is characterized in that power grid stabilization systems 10C, 10D, 10K and 10L include the plurality of self-excited converters 20. Therefore, even when power to be supplied to AC power grid 15 increases to achieve the above control, the necessary power can be supplied from the plurality of self-excited converters 20 to AC power grid 15, and thus, the control can be easily achieved.

### [Effects of fifth embodiment]

As described above, each of power grid stabilization systems 10C, 10D, 10K, and 10L according to the fifth embodiment includes the plurality of self-excited converters 20 and one or more energy storage systems 21. Then, output power of the one or more energy storage systems 21 is supplied to AC power grid 15 via the plurality of self-excited converters 20. Conversely, excess power from AC power grid 15 is stored in one or more energy storage systems 21 via the plurality of self-excited converters 20. As a result, even if the rated voltage of energy storage system 21 is limited to a relatively low value, more power can be supplied to AC power grid 15.

It should be understood that the embodiments disclosed herein are illustrative rather than restrictive in all respects. The scope of the present application is shown not by the above description but by the claims, and it is intended that all modifications that come within the meaning and range of equivalence to the claims are embraced here.

### REFERENCE SIGNS LIST

10, 10A to 10L: power grid stabilization system, 15: AC power grid, 20, 110: self-excited converter (bidirectional AC/DC converter), 21, 61: energy storage system, 21N, 61N: negative electrode terminal, 21P, 61P: positive electrode terminal, 22: control device, 23: transformer, 24: AC voltage detector, 25: AC current detector, 26, 62: DC voltage detector, 27, 132G, 133G: connection portion, 28G: neutral DC terminal, 28N, 112: negative DC terminal, 28P, 111: positive DC terminal, 40, 40A, 70: control block, 41 to 44, 71, 75: control module, 45, 79: PWM signal generator, 51: primary coil, 52: secondary coil, 53, 54: iron core, 55: reactor, 60: bidirectional DC/DC converter, 63: DC current detector, 64G, 66G: neutral terminal, 64N, 66N: negative terminal, 64P, 66P: positive terminal, 72, 76: subtractor, 73: dead zone processor, 74, 77: proportional integral calculator, 78, 81: adder, 80: proportional differential calculator, 100, 101: bidirectional AC/DC converter, 102: transformer, 113: submodule, 114, 115, L1, L2: reactor, 116: AC terminal, 121, S1 to S4: switching element, 122: power storage element, 123: voltage detector, 131N, 131P: intermediate node, D1 to D4: diode, 140: NPC converter

## Claims

1. A power grid stabilization system comprising:
a first energy storage system; and
a second energy storage system,
wherein each of the first energy storage system and the second energy storage system includes a pair of input and output terminals, and is configured to store DC power input through the pair of input and output terminals as energy and to output the stored energy as DC power through the pair of input and output terminals, and
wherein an energy storage capacity of the second energy storage system is larger than an energy storage capacity of the first energy storage system,
the power grid stabilization system further comprising:
a bidirectional AC/DC converter connected between an AC power grid and the pair of input and output terminals of the first energy storage system; and
a first bidirectional DC/DC converter connected between the pair of input and output terminals of the first energy storage system and the pair of input and output terminals of the second energy storage system.

2. The power grid stabilization system according to claim 1, further comprising a control device to control operations of the bidirectional AC/DC converter and the first bidirectional DC/DC converter,
wherein the control device causes the first bidirectional DC/DC converter to start a conversion operation when a voltage between the pair of input and output terminals of the first energy storage system changes beyond a dead zone range.

3. The power grid stabilization system according to claim 2, wherein the control device causes the first bidirectional DC/DC converter to end the conversion operation when the voltage between the pair of input and output terminals of the first energy storage system matches a voltage target value within the dead zone range or returns to an operation end range within the dead zone range.

4. The power grid stabilization system of claim 2 or 3, wherein
the control device causes the first bidirectional DC/DC converter to start the conversion operation to transfer DC power from the first energy storage system to the second energy storage system when the voltage between the pair of input and output terminals of the first energy storage system increases beyond an upper threshold value defining the dead zone range, and
the control device causes the first bidirectional DC/DC converter to start the conversion operation to transfer DC power from the second energy storage system to the first energy storage system when the voltage between the pair of input and output terminals of the first energy storage system decreases beyond a lower threshold value defining the dead zone range.

5. The power grid stabilization system according to claim 4, wherein
the first energy storage system includes a first positive electrode terminal and a first negative electrode terminal as the pair of input and output terminals,
the second energy storage system includes a second positive electrode terminal and a second negative electrode terminal as the pair of input and output terminals,
the first bidirectional DC/DC converter includes:
a first switching element connected between the first positive electrode terminal and an intermediate node;
a reactor connected between the intermediate node and the second positive electrode terminal;
a second switching element connected between a node commonly connected to the first negative electrode terminal and the second negative electrode terminal, and the intermediate node; and
a first diode and a second diode connected in parallel and in a reverse bias direction to the first switching element and the second switching element, respectively,
the control device controls the first switching element to be in a switching state of repeatedly turning on and off and controls the second switching element to be in an open state when the voltage between the pair of input and output terminals of the first energy storage system increases beyond the upper threshold value, and
the control device controls the second switching element to be in the switching state and controls the first switching element to be in the open state when the voltage between the pair of input and output terminals of the first energy storage system decreases beyond the lower threshold value.

6. The power grid stabilization system according to any one of claims 1 to 5, further comprising a second bidirectional DC/DC converter, wherein
a pair of primary-side terminals of the first bidirectional DC/DC converter and a pair of primary-side terminals of the second bidirectional DC/DC converter are connected in parallel to the pair of input and output terminals of the first energy storage system, and
a pair of secondary-side terminals of the first bidirectional DC/DC converter and a pair of secondary-side terminals of the second bidirectional DC/DC converter are connected in parallel to the pair of input and output terminals of the second energy storage system.

7. The power grid stabilization system according to any one of claims 1 to 5, further comprising:
a second bidirectional DC/DC converter; and
a third energy storage system having a pair of input and output terminals, the third energy storage system being configured to store DC power input through the pair of input and output terminals as energy and to output the stored energy as DC power through the pair of input and output terminals, wherein
an energy storage capacity of the third energy storage system is larger than the energy storage capacity of the first energy storage system,
a pair of primary-side terminals of the first bidirectional DC/DC converter and a pair of primary-side terminals of the second bidirectional DC/DC converter are connected in parallel to the pair of input and output terminals of the first energy storage system,
a pair of secondary-side terminals of the first bidirectional DC/DC converter is connected to the pair of input and output terminals of the second energy storage system, and
a pair of secondary-side terminals of the second bidirectional DC/DC converter is connected to the pair of input and output terminals of the third energy storage system.

8. The power grid stabilization system according to any one of claims 1 to 4, wherein
the bidirectional AC/DC converter and the first energy storage system constitute a modular multilevel converter,
the modular multilevel converter includes a plurality of submodules connected in cascade between a positive DC terminal and a negative DC terminal as the pair of input and output terminals, each of the plurality of submodules including a power storage element,
the power grid stabilization system further comprises a second bidirectional DC/DC converter,
a pair of primary-side terminals of the first bidirectional DC/DC converter and a pair of primary-side terminals of the second bidirectional DC/DC converter are connected in series between the positive DC terminal and the negative DC terminal, and
a pair of secondary-side terminals of the first bidirectional DC/DC converter and a pair of secondary-side terminals of the second bidirectional DC/DC converter are connected in parallel to the pair of input and output terminals of the second energy storage system.

9. The power grid stabilization system according to any one of claims 1 to 4, wherein
the bidirectional AC/DC converter and the first energy storage system constitute a modular multilevel converter,
the modular multilevel converter includes a plurality of submodules connected in cascade between a positive DC terminal and a negative DC terminal as the pair of input and output terminals, each of the plurality of submodules including a power storage element,
the power grid stabilization system further comprises:
a second bidirectional DC/DC converter, and
a third energy storage system having a pair of input and output terminals, the third energy storage system being configured to store DC power input through the pair of input and output terminals as energy and to output the stored energy as DC power through the pair of input and output terminals,
an energy storage capacity of the third energy storage system is larger than the energy storage capacity of the first energy storage system,
a pair of primary-side terminals of the first bidirectional DC/DC converter and a pair of primary-side terminals of the second bidirectional DC/DC converter are connected in series between the positive DC terminal and the negative DC terminal,
a pair of secondary-side terminals of the first bidirectional DC/DC converter is connected to the pair of input and output terminals of the second energy storage system, and
a pair of secondary-side terminals of the second bidirectional DC/DC converter is connected to the pair of input and output terminals of the third energy storage system.

10. The power grid stabilization system according to claim 8 or 9, wherein each of the first bidirectional DC/DC converter and the second bidirectional DC/DC converter is configured by a dual active bridge (DAB) system.

11. A power grid stabilization system comprising:
at least one energy storage system configured to store input DC power as energy and to output the stored energy as DC power;
a plurality of bidirectional AC/DC converters connected between an AC power grid and the at least one energy storage system; and
a plurality of transformers respectively corresponding to the plurality of bidirectional AC/DC converters, wherein
each of the plurality of bidirectional AC/DC converters is connected to the AC power grid via a corresponding transformer among the plurality of transformers,
respective primary coils of the plurality of transformers are connected to a power line of the AC power grid in series with each other or in parallel with each other, and
a secondary coil of each of the plurality of transformers is individually connected to a corresponding bidirectional AC/DC converter among the plurality of bidirectional AC/DC converters.

12. The power grid stabilization system according to claim 11,
wherein the primary coil and the secondary coil of each of the plurality of transformers are wound around an iron core common to the plurality of transformers.

13. The power grid stabilization system according to claim 11,
wherein the primary coil and the secondary coil of each of the plurality of transformers are wound around an individual iron core for each of the plurality of transformers.

14. A power grid stabilization system comprising:
at least one energy storage system configured to store input DC power as energy and to output the stored energy as DC power;
a plurality of bidirectional AC/DC converters connected between an AC power grid and the at least one energy storage system; and
a plurality of reactors each provided corresponding to each of the plurality of bidirectional AC/DC converters, wherein
the plurality of bidirectional AC/DC converters are connected to a power line of the AC power grid in parallel with each other via the respective corresponding reactors.

15. The power grid stabilization system of claim 14, further comprising a transformer, wherein
the plurality of bidirectional AC/DC converters are connected to a secondary coil of the transformer in parallel with each other via the respective corresponding reactors, and
a primary coil of the transformer is connected to the power line.

16. The power grid stabilization system according to any one of claims 11 to 15, wherein the plurality of bidirectional AC/DC converters are configured by a neutral point clamped (NPC) system.

17. The power grid stabilization system according to any one of claims 11 to 16, wherein the plurality of bidirectional AC/DC converters perform automatic frequency adjustment control for bringing a fundamental frequency of the AC power grid closer to a rated value.

18. The power grid stabilization system according to any one of claims 11 to 16, wherein the plurality of bidirectional AC/DC converters perform control based on a virtual synchronous machine model that simulates a phenomenon unique to a synchronous generator including an inertial force.
